# EUROPEAN PATENT SPECIFICATION

(11) **EP 3 239 314 B1**
(45) Date of publication and mention of the grant of the patent: **05.08.2020**
(21) Application number: 15873489.7
(22) Date of filing: 24.11.2015
(51) Int. Cl.: C21C 1/10, C22C 37/04, C21D 1/10, C22C 33/00, C22C 33/10, C21D 5/00, C21D 9/00

(54) **SPHEROIDAL GRAPHITE CAST IRON, MANUFACTURING METHOD THEREFOR, AND HYDRAULIC DEVICE COMPONENT MANUFACTURED THEREFROM**
KUGELGRAPHITGUSSEISEN, HERSTELLUNGSVERFAHREN DAFÜR UND DARAUS HERGESTELLTE HYDRAULIKVORRICHTUNGSKOMPONENTE
FONTE À GRAPHITE SPHÉROÏDAL, SON PROCÉDÉ DE FABRICATION ET COMPOSANT DE DISPOSITIF HYDRAULIQUE FABRIQUÉ À PARTIR DE CETTE DERNIÈRE

(30) Priority: 24.12.2014 KR 20140187871
(43) Date of publication of application: 01.11.2017
(73) Proprietor: Doosan Infracore Co., Ltd., Incheon 22502 (KR)
(72) Inventor: JUNG, Ki Hwan, Bucheon-si Gyeonggi-do 14535 (KR); JU, Young Kyu, Seoul 08054 (KR); CHUNG, Jong Kwon, Incheon 22739 (KR); SHIM, Dong Seob, Ansan-si Gyeonggi-do 15463 (KR)
(74) Representative: Isarpatent
(86) International application number: PCT/KR2015/012634
(87) International publication number: WO 2016/104961

(56) References cited:
- JP-A- 2000 239 780
- JP-A- 2002 003 982
- JP-A- 2002 275 574
- JP-A- 2002 275 575
- JP-A- 2005 002 445
- JP-A- 2013 117 045
- KR-A- 20110 072 048
- KR-A- 20140 061 165
- US-A1- 2003 051 776

## Description

### Technical Field

The present invention relates to a spheroidal graphite cast iron, according to the invention used to manufacture a hydraulic device component (for example, a housing), a method for manufacturing said spheroidal graphite cast iron, a hydraulic device component manufactured of said spheroidal cast iron, and a method for manufacturing said hydraulic device component.

### Background Art

Despite lower strength and abrasion resistance of a spheroidal graphite cast iron than steel materials, such as carbon steel, alloy steel, and forged steel, it is easy to manufacture and can secure strength and abrasion resistance equal to or higher than those of steel materials through high-frequency induction hardening (or high-frequency heat treatment), and thus is utilized as a substitute material for a steel material.

However, a spheroidal graphite cast iron is manufactured by injecting a molten metal into a mold and coagulating the molten metal, and thus, it is difficult for spherical graphite to be uniformly formed in a matrix. When such a spheroidal graphite cast iron having non-uniformly formed, spherical graphite is subjected to high-frequency induction hardening, the martensite transformation of the matrix is not easy and the hard layer and physical property values required are difficult to secure, so that a casting (component) obtained by subjecting spheroidal graphite cast iron to high-frequency induction hardening is easily transformed. Therefore, despite increased strength and abrasion resistance of a spheroidal graphite cast iron through high-frequency induction hardening, it is restrictively used only in small components that are not susceptible to transformation during high-frequency induction hardening (for example, engine components or transmission components for automobiles).

Accordingly, in order to increase the availability of spheroidal graphite cast iron, a technique has been proposed that improves a high-frequency induction hardening process of the spheroidal graphite cast iron, thereby advancing the physical properties of a spheroidal graphite cast iron. However, the technique has a limitation in controlling the number of spherical graphite, the size of spherical graphite, the spheroidization ratio, and the fraction of pearlite in spheroidal graphite cast iron, which are key factors for obtaining physical property values required in a hardened portion subjected to high-frequency induction hardening.

In order to solve such limitation, a technique has been proposed that improves physical properties of the spheroidal graphite cast iron by adding an expensive element, such as nickel (Ni) and molybdenum (Mo), to control key factors of the spheroidal graphite cast iron. However, according to the technique, a pearlite fraction is less than 10%, and thus, a plastic processing portion, when being subjected to high-frequency induction hardening, has difficulty in the martensite transformation of the matrix. Therefore, the technique has a limitation in increasing the strength and abrasion resistance of spheroidal graphite cast iron.

US 2003/0051776 describes a modular graphite cast iron having a perlite matrix which consists essentially of, by weight %, from 3.0 to 4.6% of carbon; from 1.6 to 2.5% of silicon; from 0.2 to 0.6% of manganese; from 0.02 to 0.05% of magnesium; from 0.0004 to 0.090% of zirconium; at least one of tin and copper such that alpha ranges from 0.01 to 0.06% where alpha indicates a tin conversion amount defined by a summation of a weight % of the tin and 0.1xa weight % of the copper; and the balance of iron and inevitable foreign matters.

JP 2002 275575 describes high strength spheroidal graphite cast iron which has tensile strength of >=900 MPa without undergoing heat treatment. The high strength spheroidal graphite cast iron has a composition containing, by weight, 3.0 to 4.5% carbon, 1.6 to 2.5% silicon, 0.2 to 0.5% manganese, 0.03 to 0.05% magnesium, and 0.0005 to 0.09% zirconium, and further containing one or two kinds selected from tin and copper, and in which, provided that the content expressed in terms of tin (the content expressed in terms of tin is the wt.% of tin plus the wt.% of copper * 0.1) is defined as [alpha], the [alpha] is 0.03 to 0.11%, and the balance iron is with inevitable impurities. The cast iron has a tensile strength of >=900 MPa without undergoing heat treatment. The content of tin can be controlled to 0.04 to 0.08 wt.%.

Therefore, a spheroidal graphite cast iron is required that has uniform spherical graphite and matrix, and thus has minimized transformation and exhibits strength and abrasion resistance equal to or higher than those of steel materials even though the time for high-frequency induction hardening varies depending on the size of a component.

### Detailed Description of the Invention

### Technical Problem

An object of the present invention is to provide a spheroidal graphite cast iron having spherical graphite uniformly formed in the matrix and a method for manufacturing the same.

Another object of the present invention is to provide a method for manufacturing a hydraulic device component including the spheroidal graphite cast iron.

### Technical Solution

In order to achieve the objects as above, the present invention provides a a spheroidal graphite cast iron comprising 3.4 to 3.8 wt% of carbon (C), 2.0 to 2.4 wt% of silicon (Si), 0.2 to 0.5 wt% of manganese (Mn), 0.025 to 0.06 wt% of magnesium (Mg), 0.2 to 0.5 wt% of copper (Cu), 0.005 to 0.01 wt% of zirconium (Zr), and the balance iron (Fe) and impurities, and wherein the ratio (Cu/Zr) of the content of the copper (Cu) to the content of the zirconium (Zr) is 20 to 100.

In addition, the present invention provides a method for manufacturing a spheroidal graphite cast iron, the method including: (a) preparing a raw-material molten metal containing carbon (C), silicon (Si), manganese (Mn), iron (Fe), and impurities; (b) adding copper (Cu) to the raw-material molten metal; (c) adding zirconium (Zr) to the raw-material molten metal, to which the copper (Cu) has been added, such that the ratio (Cu/Zr) of the content of the copper (Cu) to the content of the zirconium (Zr) is 20 to 100; (d) adding a spheroidizing agent made of Fe-Si-Mg to the raw-material molten metal, to which the zirconium (Zr) has been added; and (e) adding an inoculant made of Fe-Si to the raw-material molten metal, to which the spheroidizing agent has been added, thereby preparing a cast-iron molten metal containing 3.4 to 3.8 wt% of carbon (C), 2.0 to 2.4 wt% of silicon (Si), 0.2 to 0.5 wt% of manganese (Mn), 0.2 to 0.5 wt% of copper (Cu), 0.005 to 0.01 wt% of zirconium (Zr), 0.025 to 0.06 wt% of magnesium (Mg), and the balance iron (Fe) and impurities.

In addition, the present invention provides a method for manufacturing a hydraulic device component, the method comprising subjecting the spheroidal graphite cast iron of the invention to high-frequency induction hardening.

### Advantageous Effects

The present invention can provide a spheroidal graphite cast iron having a uniform size and distribution of spherical graphite and a high fraction of pearlite in the matrix, by controlling the ratio (Cu/Zr) of the content of copper (Cu) to the content of zirconium (Zr) to manufacture the spheroidal graphite cast iron. In addition, the present invention can provide a hydraulic device component having a minimized transformation and exhibiting strength and abrasion resistance equal to or higher than those of steel materials (carbon steel, alloy steel, and forged steel) by subjecting the spheroidal graphite cast iron to high-frequency induction hardening.

### Brief Description of the Drawings

FIG. 1 is a flow chart showing a process for manufacturing a spheroidal graphite cast iron according to an embodiment of the present invention.
FIGs. 2 to 5 are reference images for illustrating examples and experimental examples of the present invention.

### Mode for Carrying Out the Invention

Hereinafter, the present invention will be described in detail.

### 1. Spheroidal graphite cast iron

The spheroidal graphite cast iron contains carbon (C), silicon (Si), manganese (Mn), magnesium (Mg), copper (Cu), and zirconium (Zr) in particular content ranges while the content ratio (Cu/Zr) of copper (Cu) to zirconium (Zr) falls within a particular range, so that spherical graphite having a predetermined size are uniformly distributed in the matrix. This will be described in detail as below.

The spheroidal graphite cast iron contains 3.4 to 3.8 wt% of carbon (C) based on the total weight thereof. Carbon (C) is an element that generates spherical graphite or fine pearlite. If the content of carbon (C) is less than 3.4 wt%, the number of spherical graphite for carbon diffusion per unit area (1 mm²) may be reduced, which results in a deterioration in stable martensite transformation of the matrix. If the content of carbon (C) is more than 3.8 wt%, primary graphite may be excessively formed or chunky graphite may be formed, thereby making it difficult to obtain a normal spheroidal graphite cast iron. Therefore, it is preferred that the content of carbon (C) falls within the above range.

The spheroidal graphite cast iron contains 2.0 to 2.4 wt% of silicon (Si) based on the total weight thereof. If the content of silicon (Si) is less than 2.0 wt%, the number of spherical graphite may be reduced or shrinkage defect may be caused in a final coagulated portion of a molten metal. If the content of silicon (Si) is more than 2.4 wt%, spherical graphite may be excessively formed, which results in a reduction in the fraction of pearlite, so that the tensile strength of the spheroidal graphite cast iron may deteriorate or the performance after high-frequency induction hardening may deteriorate. Therefore, it is preferred that the content of silicon (Si) falls within the above range.

The spheroidal graphite cast iron contains 0.2 to 0.5 wt% of manganese (Mn) based on the total weight thereof. Manganese (Mn) is a representative element that generates pearlite and reacts with sulfur (S) to form nucleation sites of spherical graphite. If the content of Manganese (Mn) is less than 0.2 wt%, the number of nucleation sites may be reduced, which results in a high formation rate of coarse spherical graphite, thereby making it difficult to obtain a normal spheroidal graphite cast iron. If the content of Manganese (Mn) is more than 0.5 wt%, pearlite may be excessively generated in the matrix, and thus, normalizing and high-frequency induction hardening may excessively increase in the surface hardness, resulting in a deterioration of brittleness. Therefore, it is preferred that the content of manganese (Mn) falls within the above range.

The spheroidal graphite cast iron contains 0.025 to 0.06 wt% of magnesium (Mg) based on the total weight thereof. Magnesium (Mg) is an element that accelerates the formation of spherical graphite by reacting with sulfur (S) and oxygen (O), which are elements inhibiting spheroidization, to remove these elements. If the content of Magnesium (Mg) is less than 0.025 wt%, compacted graphite iron (CGI) or flake graphite may be formed. If the content of Magnesium (Mg) is more than 0.06 wt%, the possibility of occurrence of chill may be increased, which results in a deterioration of brittleness. Therefore, it is preferred that the content of magnesium (Mg) falls within the above range.

The spheroidal graphite cast iron contains 0.2 to 0.5 wt% of copper (Cu) based on the total weight thereof. Copper (Cu), which is an element that anneals the matrix of the spheroidal graphite cast iron, functions to promote the generation of pearlite and to micronize pearlite. If the content of copper (Cu) is less than 0.2 wt%, the generation of pearlite may be reduced, thereby making it difficult to obtain a required tensile strength. If the content of copper (Cu) is more than 0.5 wt%, pearlite may be excessively generated, and thus, normalizing and high-frequency induction hardening may excessively increase the surface hardness, resulting in a deterioration of brittleness. Therefore, it is preferred that the content of copper (Cu) falls within the above range.

The spheroidal graphite cast iron contains 0.005 to 0.01 wt% of zirconium (Zr) based on the total weight thereof. Zirconium (Zr) is an element that reacts with sulfur (S) to form a sulfide or forms a substrate in which nuclei of spheroidal graphite can grow in other forms, thereby uniformly forming spherical graphite. If the content of Zirconium (Zr) is less than 0.005 wt%, chunky graphite, explosive graphite, carbon dross, or the like may be formed. If the content of Zirconium (Zr) is more than 0.01 wt%, spherical graphite may be excessively formed, thereby making it difficult to obtain a normal spheroidal graphite cast iron. Therefore, it is preferred that the content of zirconium (Zr) preferably falls within the above range.

The spheroidal graphite cast iron contains, in addition to the above ingredients, the balance iron (Fe) and impurities. The impurities are not particularly limited, but an example thereof may be sulfur (S), phosphorus (P), or the like.

Here, the content of sulfur (S) contained in the spheroidal graphite cast iron is not particularly limited, but is preferably 0.002 to 0.01 wt% based on the total weight of the spheroidal graphite cast iron. If the content of sulfur (S) is less than 0.002 wt%, the number of nucleation sites of spherical graphite may be reduced, which result in a high formation rate of coarse spherical graphite. If the content of sulfur (S) is more than 0.01 wt%, graphite spheroidization may be inhibited, which results in the formation of flake graphite. Therefore, it is preferred that the content of sulfur (S) falls within the above range.

In addition, the content of phosphor (P) contained in the spheroidal graphite cast iron is also not particularly limited, but is preferably 0.06 wt% or less based on the total weight of the spheroidal graphite cast iron. Phosphor (P) is an impurity that is naturally added in the process for manufacturing a spheroidal graphite cast iron. Phosphor (P) hardens the matrix by forming a phosphide (steadite). But, if the content of Phosphor (P) is more than 0.06 wt%, a phosphide (steadite) may be excessively formed, which results in a rapid increase in the brittleness, and causes deterioration in the processability. Therefore, it is preferred that the content of phosphor (P) falls within the above range.

Meanwhile, the spheroidal graphite cast iron contains zirconium (Zr) and copper (Cu) with the above ranges, and the ratio of the content of copper (Cu) to the content of zirconium (Zr) is 20 to 100, preferably 30 to 90. When the ratio of Cu/Zr is within 20 to 100, a complex reaction of copper (Cu), which is an element for pearlite generation and graphitization, and zirconium (Zr), which functions as a nucleation site of graphite, is optimized, thereby obtaining a spheroidal graphite cast iron in which spherical graphite having a predetermined size are uniformly distributed in the matrix. As a result, the number of spherical graphite, the size of spherical graphite, the spheroidization ratio, and the fraction of pearlite, which are key factors of the spheroidal graphite cast iron, may be controlled.

Specifically, in the spheroidal graphite cast iron, the number of spherical graphite per unit area (1 mm²) is 130 or more, preferably 140 to 200, and the size of spherical graphite is 50 *µ*m or less, preferably 10 to 45 *µ*m. If the number of spherical graphite per unit area (1 mm²) is less than 130, the spherical graphite becomes coarse, and thus a required spheroidization ratio is difficult to obtain, and graphite, such as chunky graphite, explosive graphite, or carbon dross, may be formed, and therefore, the number of spherical graphite is preferably 130 or more. The reason why the size of the spherical graphite is preferably 50 *µ*m or less is also the same.

In addition, the spheroidal graphite cast iron of the present invention has a spheroidization ratio of 80% or higher (preferably 80 to 100%) even though the cross-section thickness of the spheroidal graphite cast iron is 30 mm or more.

In addition, the spheroidal graphite cast iron has a pearlite fraction of 50 to 85% in the matrix. When the pearlite fraction is less than 50%, the martensite transformation of the matrix is not stably performed. Thus, even though the spheroidal graphite cast iron is subjected to high-frequency induction hardening, a hydraulic device component having required physical property values may be difficult to secure. When the pearlite fraction is more than 85%, normalizing and high-frequency induction hardening may lead to an excessive increase in the surface hardness of a spheroidal graphite cast iron. Thus, the brittleness of the hydraulic device component may deteriorate or an additional heat treatment may be needed. Therefore, the pearlite fraction is preferably 50 to 85%.

Meanwhile, the spheroidal graphite cast iron has a tensile strength of 550 to 650 MPa. Since the tensile strength falls within the above range, the spheroidal graphite cast iron is subjected to normalizing and high-frequency induction hardening, thereby producing a hydraulic device component having required physical property values.

### 2. Manufacturing method for spheroidal graphite cast iron

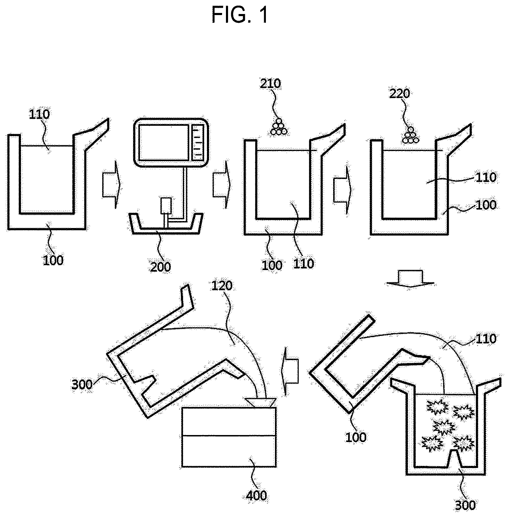

The present invention provides a manufacturing method for the above described spheroidal graphite cast iron, which will be described in detail with reference to FIG. 1.

### (a) Preparing raw-material molten metal

First, a raw-material molten metal 110 containing carbon (C), silicon (Si), manganese (Mn), iron (Fe), and impurities is prepared. A method of preparing the raw-material molten metal 110 is not particularly limited as long as the method is known in the art. Meanwhile, the contents of carbon (C), silicon (Si), and manganese (Mn) contained in the raw-material molten metal are preferably 3.4 to 3.8 wt% for carbon (C), 1.4 to 1.8 wt% for silicon (Si), and 0.2 to 0.5 wt% for manganese (Mn) based on the total weight of the raw-material molten metal 110.

### (b) Adding copper (Cu)

Copper (Cu) 210 is added to the prepared raw-material molten metal 110. Here, the addition amount of copper (Cu) 210 is 0.2 to 0.5 wt% based on the total amount of the raw-material molten metal 110.

### (c) Adding zirconium (Zr)

Zirconium (Zr) 220 is added to the raw-material molten metal 110 to which the copper (Cu) has been added, such that the ratio (Cu/Zr) of the content of copper (Cu) 210 to the content of zirconium (Zr) 220 is 20 to 100. Specifically, zirconium (Zr) is added in a content of 0.005 to 0.01 wt% based on the total amount of the raw-material molten metal 110. Since the ratio Cu 210 /Zr 220 is adjusted to a range of 20 to 100, a spheroidal graphite cast iron, in which spherical graphite having a predetermined size are uniformly distributed, can be obtained.

Meanwhile, zirconium (Zr) 220 is not added in step (a) of preparing a raw-material molten metal 110 but is added later, thereby preventing the conversion of zirconium (Zr) 220 into an oxide, and thus, the addition amount of zirconium (Zr) 220 contained in the raw-material molten metal 110 can be maintained (when zirconium (Zr) 220 is converted into an oxide, the oxide floats on the surface of the raw-material molten metal 110, and then regarded as an impurity to be removed).

The raw-material molten metal 110 to which zirconium (Zr) 200 has been added is analyzed by using a carbon equivalent meter, a carbon/sulfur analyzer, a spectrometer, and the like, so that the ingredients of the raw-material molten metal 110 are monitored to investigate whether the respective ingredients are contained in the required contents.

### (d) Performing spheroidization

A spheroidizing agent made of Fe-Si-Mg is added to the raw-material molten metal 110 to which zirconium (Zr) 220 has been added. Specifically, the raw-material molten metal 110 is poured into a ladle 300, which is a container for tapping, and a spheroidizing agent made of Fe-Si-Mg for promoting graphite spheroidization is added to perform graphite spheroidization. Here, the addition amount of the spheroidizing agent made of Fe-Si-Mg is not particularly limited, but is preferably 1.1 ± 0.05 wt%. By adding such a spheroidizing agent, the content of magnesium (Mg) contained in the spheroidal graphite cast iron is determined. Meanwhile, in order to improve the stabilization of the spheroidal graphite cast iron, an inoculant made of Fe-Si, which will be described later, may be added during spheroidization.

### (e) Preparing cast-iron molten metal

An inoculant made of Fe-Si is added to the raw-material molten metal 110 to which the spheroidizing agent has been added, to prepare a cast iron molten metal 120 containing 3.4 to 3.8 wt% of carbon (C), 2.0 to 2.4 wt% of silicon (Si), 0.2 to 0.5 wt% of manganese (Mn), 0.2 to 0.5 wt% of copper (Cu), 0.005 to 0.01 wt% of zirconium (Zr), 0.025 to 0.06 wt% of magnesium (Mg), and the balance iron (Fe) and impurities. Here, the addition amount of the inoculant made of Fe-Si is not particularly limited, but is preferably 0.5 ± 0.05 wt%.

Thereafter, the temperature of the prepared cast-iron molten metal 120 is measured using a deposition-type thermometer, and then the cast-iron molten metal is injected into a casting mold 400 to manufacture a spheroidal graphite cast iron having a desired shape.

### 3. Hydraulic device component

The present invention provides a hydraulic device component manufactured by subjecting the above-described spheroidal graphite cast iron to high-frequency induction hardening. Since the hydraulic device component of the present invention is obtained by subjecting the above-described spheroidal graphite cast iron to high-frequency induction hardening, the hydraulic device component has a surface hardness within a required range and a minimized amount of transformation. That is, when the above-described spheroidal graphite cast iron is subjected to high-frequency induction hardening, the matrix is transformed into stable martensite and the transformation of a heat-affected zone is minimized, and therefore, the present invention can provide a hydraulic device component having a surface hardness with an optimal range and a minimized amount of transformation.

The hydraulic device component of the present invention has a surface hardness of HRC 55 to 65, which is equal to or higher than the surface hardness of a steel material, and has a transformation amount of 65 *µ*m or less (preferably 0 to 60 *µ*m), measured according to KS B 0806.

Meanwhile, a method for subjecting a spheroidal graphite cast iron to high-frequency induction hardening to obtain the hydraulic device component of the present invention is not particularly limited as long as the method is known in the art, but the method may be conducted such that the spheroidal graphite cast iron is subjected to primary hardening at a temperature of 850 to 1050°C, cooled with water or oil, and then subjected to secondary hardening at a temperature of 120 to 250°C.

In addition, the hydraulic device component of the present invention is preferable as long as the spheroidal graphite cast iron is subjected to a normalizing process before the high-frequency induction hardening. Here, a method for normalizing a spheroidal graphite cast iron is not particularly limited as long as the method is known in the art, but the method may be conducted by a heat treatment at 880 to 910°C for 3 to 5 hours and then cooling to room temperature.

Hereinafter, the present invention is described in detail through examples.

### [Examples 1 to 6 and Comparative Examples 1 to 8]

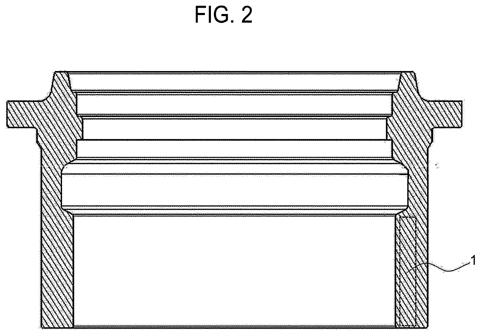

A raw-material molten metal, which has been melted in a blast furnace, was poured into a ladle, and a spheroidizing agent made of Fe-Si-Mg and an inoculant made of Fe-Si (primary inoculation) were added to perform graphite spheroidization. Then, an inoculant made of Fe-Si (secondary inoculation) was added to the raw-material molten metal, of which graphite spheroidization has been performed, to prepare a cast iron molten melt, which was then injected into a casting frame, thereby manufacturing spheroidal graphite cast irons having the compositions shown in Table 1 below. Here, the shape of the spheroidal graphite cast irons was a housing shape having the cross section shown in FIG. 2. Meanwhile, the spheroidal graphite iron cast of Comparative Example 8 was manufactured by the same method as in Example 1 except that nickel (Ni) and molybdenum (Mo) were used instead of copper (Cu) and zirconium (Zr).

**[Table 1]**

| | C | Si | Mn | S | P | Mg | Cu | Zr | Cu/Zr | Fe |
|---|---|---|---|---|---|---|---|---|---|---|
| Example 1 | 3.62 | 2.22 | 0.47 | 0.007 | 0.03 | 0.043 | 0.50 | 0.005 | 100 | Balance |
| Example 2 | 3.41 | 2.31 | 0.33 | 0.003 | 0.03 | 0.029 | 0.34 | 0.009 | 37.7 | Balance |
| Example 3 | 3.74 | 2.09 | 0.39 | 0.004 | 0.04 | 0.038 | 0.20 | 0.010 | 20 | Balance |
| Example 4 | 3.80 | 2.17 | 0.27 | 0.006 | 0.02 | 0.055 | 0.37 | 0.008 | 46.2 | Balance |
| Example 5 | 3.66 | 2.28 | 0.43 | 0.006 | 0.04 | 0.052 | 0.50 | 0.010 | 50 | Balance |
| Example 6 | 3.53 | 2.33 | 0.33 | 0.004 | 0.02 | 0.041 | 0.39 | 0.005 | 78 | Balance |
| Comparative Example 1 | 3.79 | 2.11 | 0.42 | 0.005 | 0.03 | 0.040 | 0.48 | 0.003 | 160 | Balance |
| Comparative Example 2 | 3.55 | 2.19 | 0.37 | 0.006 | 0.05 | 0.039 | 0.25 | 0.016 | 15.6 | Balance |
| Comparative Example 3 | 3.68 | 2.34 | 0.29 | 0.007 | 0.05 | 0.033 | 0.64 | 0.006 | 106.6 | Balance |
| Comparative Example 4 | 3.49 | 2.29 | 0.41 | 0.007 | 0.04 | 0.050 | 0.16 | 0.009 | 17.7 | Balance |
| Comparative Example 5 | 3.63 | 2.13 | 0.34 | 0.003 | 0.03 | 0.048 | 0.78 | 0.024 | 32.5 | Balance |
| Comparative Example 6 | 3.59 | 2.21 | 0.44 | 0.004 | 0.05 | 0.054 | 0.12 | 0.003 | 40 | Balance |
| Comparative Example 7 | 3.55 | 2.34 | 0.39 | 0.008 | 0.04 | 0.041 | 0.11 | 0.002 | 55 | Balance |
| Comparative Example 8 | 3.71 | 1.94 | 0.42 | 0.021 | 0.04 | 0.036 | 0.47%Ni | | - | Balance |
| | | | | | | | 0.42%Mo | | | |
| Unit: wt% | | | | | | | | | | |

### [Experimental Example 1] Confirmation of matrixes of spheroidal graphite cast irons

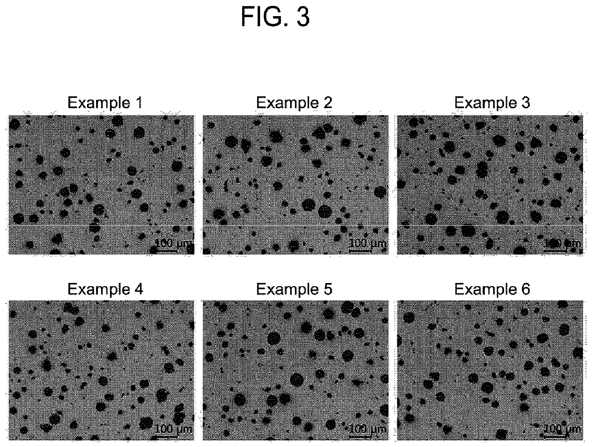

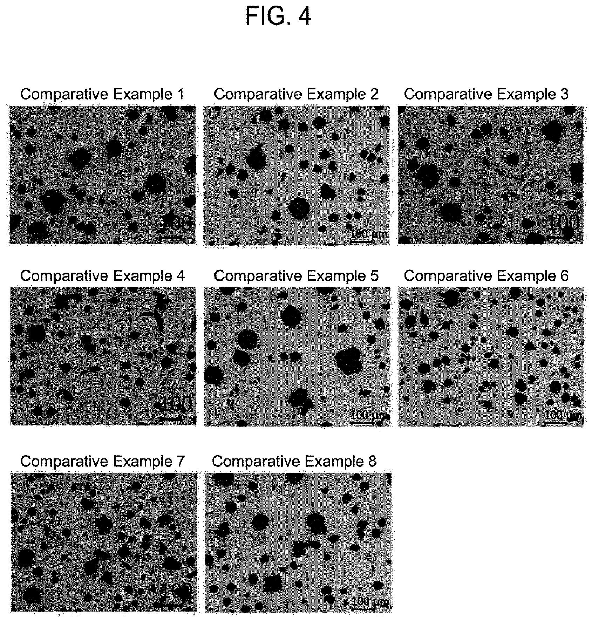

The matrixes of the spheroidal graphite cast irons manufactured in Examples 1 to 6 and Comparative Example 1 to 8 were monitored using an optical microscope (ASTM E 3-2001/E 883-2011), and the results are shown in FIGs. 3 and 4.

Referring to FIG. 3, it could be confirmed that the spherical graphite having a predetermined size were uniformly distributed in the spheroidal graphite cast irons of the present invention.

While, referring to FIG. 4, it could be confirmed that the size of spherical graphite was not uniform and the distribution of spherical graphite was not uniform in the spheroidal graphite cast irons of Comparative Examples 1 to 8.

### [Experimental Example 2] Evaluation of physical properties of spheroidal graphite cast irons

Test pieces (1 in FIG. 2) were collected from the spheroidal graphite cast irons manufactured in Examples 1 to 6 and Comparative Examples 1 to 8, and then the physical properties thereof were evaluated by the following methods. The results are shown in Table 2 below.
1. Tensile strength (MPa): Measured according to KS B 0802:2003.
2. Number of spherical graphite (ea/mm²) Measured according to ISO 945-1:2008.
3. Size of spherical graphite (*µ*m): Measured according to ISO 945-1:2008.
4. Spheroidization ratio (%): Measured according to KS D 4302:2011.
5. Pearlite fraction (%): Measured according to KS D 4302:2011.

**[Table 2]**

| | Tensile strength (MPa) | Number of spherical graphite (ea/mm²) | Size of spherical graphite (um) | Spheroidization ratio (%) | Pearlite fraction (%) |
|---|---|---|---|---|---|
| Example 1 | 635 | 142 | 42 | 86 | 82 |
| Example 2 | 612 | 172 | 34 | 85 | 64 |
| Example 3 | 561 | 169 | 38 | 94 | 74 |
| Example 4 | 595 | 166 | 34 | 89 | 69 |
| Example 5 | 622 | 156 | 41 | 90 | 79 |
| Example 6 | 572 | 134 | 46 | 82 | 81 |
| Comparative Example 1 | 492 | 109 | 72 | 78 | 58 |
| Comparative Example 2 | 548 | 98 | 86 | 77 | 54 |
| Comparative Example 3 | 661 | 111 | 76 | 73 | 84 |
| Comparative Example 4 | 473 | 127 | 48 | 78 | 39 |
| Comparative Example 5 | 679 | 89 | 91 | 74 | 89 |
| Comparative Example 6 | 466 | 103 | 88 | 79 | 41 |
| Comparative Example 7 | 459 | 116 | 71 | 61 | 32 |
| Comparative Example 8 | 497 | 114 | 41 | 83 | 21 |

Referring to Table 2, it could be confirmed that the spheroidal graphite cast irons according to the present invention satisfied all the conditions: a tensile strength in the range of 550 to 650 MPa, a number of spherical graphite per unit area (1 mm²) in the range of 130 to 190, a size of spherical graphite of 50 *µ*m or less, a spheroidization ratio of 80% or higher, and a pearlite fraction of 50 to 85%. The number of spherical graphite per unit area (1 mm²) may be preferably 134 to 172.

In contrast, it could be confirmed that Comparative Examples 1 to 3 did not satisfy the physical property values required in the present invention except for the pearlite fraction, and Comparative Example 4 did not satisfy the physical property values required in the present invention except for the size of spherical graphite. In addition, it could be confirmed that Comparative Examples 5 to 7 did not satisfy the physical property values required in the present invention, and Comparative Example 8 did not satisfy the physical property values required in the present invention except for the size of spherical graphite and the spheroidization ratio.

### [Manufacturing Examples 1 to 6 and Comparative Manufacturing Examples 1 to 8] Manufacture of hydraulic device components

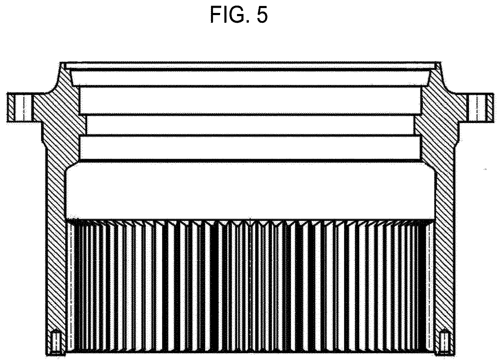

The spheroidal graphite cast irons manufactured in Examples 1 to 6 and Comparative Examples 1 to 8 were tooth-profile processed into the shape shown in FIG. 5, and the tooth-profile processed portions were subjected to a surfacing treatment and high-frequency induction hardening to manufacture housings, which are hydraulic device components.

### [Experimental Example 2] Evaluation of physical properties of hydraulic device components

The physical properties of the hydraulic device components manufactured in Manufacturing Examples 1 to 6 and Comparative Manufacturing Examples 1 to 8 were evaluated by the following methods, and the results are shown in Table 3 below.
1. Surface hardness (HRC): Measured according to KS B 0806.
2. Transformation amount (*µ*m): Measured using a three-dimensional measuring instrument.

**[Table 3]**

| | Surface hardness (HRC) | Transformation amount (*µ*m) |
|---|---|---|
| Example 1 | 64 | 61 |
| Example 2 | 62 | 54 |
| Example 3 | 56 | 32 |
| Example 4 | 59 | 41 |
| Example 5 | 61 | 59 |
| Example 6 | 57 | 44 |
| Comparative Example 1 | 48 | 69 |
| Comparative Example 2 | 53 | 72 |
| Comparative Example 3 | 68 | 88 |
| Comparative Example 4 | 44 | 78 |
| Comparative Example 5 | 67 | 81 |
| Comparative Example 6 | 47 | 76 |
| Comparative Example 7 | 46 | 71 |
| Comparative Example 8 | 41 | 74 |

Referring to Table 3 above, it could be confirmed that the hydraulic device components according to the present invention had a surface hardness in the range of HRC 55 to 65 and a transformation amount of 65 *µ*m or less.

## Claims

1. A spheroidal graphite cast iron comprising 3.4 to 3.8 wt% of carbon (C), 2.0 to 2.4 wt% of silicon (Si), 0.2 to 0.5 wt% of manganese (Mn), 0.2 to 0.5 wt% of copper (Cu), 0.005 to 0.01 wt% of zirconium (Zr), 0.025 to 0.06 wt% of magnesium (Mg), and the balance iron (Fe) and impurities, and
wherein the ratio of the content of the copper (Cu) to the content of the zirconium (Zr) is 20 to 100.

2. The spheroidal graphite cast iron of claim 1, wherein in the spheroidal graphite cast iron, the number of spherical graphite per unit area 1 mm² is 130 to 190 as measured according to ISO 945-1:2008 and the size of spherical graphite measured according to ISO 945-1:2008 is 50 *µ*m or less.

3. The spheroidal graphite cast iron of claim 1, wherein in the spheroidal graphite cast iron, the spheroidization ratio measured according to KS D 4302:2011 is 80% or higher.

4. The spheroidal graphite cast iron of claim 1, wherein in the spheroidal graphite cast iron, the fraction of pearlite in a matrix measured according to KS D 4302:2011 is 50 to 85%.

5. The spheroidal graphite cast iron of claim 1, wherein in the spheroidal graphite cast iron, the tensile strength measured according to KS B 0802:2003 is 550 to 650 MPa.

6. A method for manufacturing a spheroidal graphite cast iron, the method comprising:
(a) preparing a raw-material molten metal containing carbon (C), silicon (Si), manganese (Mn), iron (Fe), and impurities;
(b) adding copper (Cu) to the raw-material molten metal;
(c) adding zirconium (Zr) to the raw-material molten metal, to which the copper (Cu) has been added, such that the ratio (Cu/Zr) of the content of the copper (Cu) to the content of the zirconium (Zr) is 20 to 100;
(d) adding a spheroidizing agent made of Fe-Si-Mg to the raw-material molten metal, to which the zirconium (Zr) has been added; and
(e) adding an inoculant made of Fe-Si to the raw-material molten metal, to which the spheroidizing agent has been added, thereby preparing a cast-iron molten metal containing 3.4 to 3.8 wt% of carbon (C), 2.0 to 2.4 wt% of silicon (Si), 0.2 to 0.5 wt% of manganese (Mn), 0.2 to 0.5 wt% of copper (Cu), 0.005 to 0.01 wt% of zirconium (Zr), 0.025 to 0.06 wt% of magnesium (Mg), and the balance iron (Fe) and impurities.

7. A hydraulic device component manufactured of the spheroidal cast iron of any one of claims 1 to 5, wherein the thickness of transformation of a heat affected zone is 65µm or less and the surface hardness of the hydraulic device component is HRC 55 to 65 as measured according to KS B 0806.

8. A method for manufacturing a hydraulic device component according to claim 7, the method comprising subjecting the spheroidal graphite cast iron of any one of claims 1 to 5 to high-frequency induction hardening.

9. The method for manufacturing a hydraulic device component of claim 8, wherein the spheroidal graphite cast iron is subjected to primary hardening at a temperature of 850 to 1050 °C, cooled with water or oil, and then subjected to secondary hardening at a temperature of 120 to 250 °C.

## Patentansprüche

1. Gusseisen mit Kugelgraphit, umfassend 3,4 bis 3,8 Gew.-% Kohlenstoff (C), 2,0 bis 2,4 Gew.-% Silicium (Si), 0,2 bis 0,5 Gew.-% Mangan (Mn), 0,2 bis 0,5 Gew.-% Kupfer (Cu), 0,005 bis 0,01 Gew.-% Zirkonium (Zr), 0,025 bis 0,06 Gew.-% Magnesium (Mg), und als Rest Eisen (Fe) und Verunreinigungen, und
wobei das Verhältnis des Gehalts des Kupfers (Cu) zum Gehalt des Zirkoniums (Zr) 20 bis 100 beträgt.

2. Gusseisen mit Kugelgraphit nach Anspruch 1, wobei bei dem Gusseisen mit Kugelgraphit die Anzahl von Kugelgraphit pro Flächeneinheit 1 mm² 130 bis 190 beträgt, gemessen nach ISO 945-1:2008, und die Größe des Kugelgraphits 50 µm oder weniger beträgt, gemessen nach ISO 945-1:2008.

3. Gusseisen mit Kugelgraphit nach Anspruch 1, wobei in dem Gusseisen mit Kugelgraphit das nach KS D 4302:2011 gemessene Sphäroidisierungsverhältnis 80% oder höher ist.

4. Gusseisen mit Kugelgraphit nach Anspruch 1, wobei in dem Gusseisen mit Kugelgraphit der Anteil von Perlit in einer Matrix 50 bis 85% beträgt, gemessen nach KS D 4302:2011.

5. Gusseisen mit Kugelgraphit nach Anspruch 1, wobei in dem Gusseisen mit Kugelgraphit die nach KS B 0802:2003 gemessene Zugfestigkeit 550 bis 650 MPa beträgt.

6. Verfahren zur Herstellung eines Gusseisens mit Kugelgraphit, wobei das Verfahren umfasst:
(a) Herstellen einer Rohmaterial-Metallschmelze, die Kohlenstoff (C), Silizium (Si), Mangan (Mn), Eisen (Fe) und Verunreinigungen enthält;
(b) Hinzufügen von Kupfer (Cu) zu der Rohmaterial-Metallschmelze;
(c) Hinzufügen von Zirkonium (Zr) zu der Rohmaterial-Metallschmelze, der das Kupfer (Cu) hinzugefügt wurde, so dass das Verhältnis (Cu/Zr) des Gehalts an Kupfer (Cu) zum Gehalt an Zirkonium (Zr) 20 bis 100 beträgt;
(d) Hinzufügen eines Sphäroidisierungsmittels aus Fe-Si-Mg zu der Rohmaterial-Metallschmelze, der das Zirkonium (Zr) hinzugefügt worden ist; und
(e) Zugabe eines Impfmittels aus Fe-Si zu der Rohmaterial-Metallschmelze, zu der das Sphäroidisierungsmittel zugegeben wurde, wodurch eine Gusseisen-Metallschmelze, die 3,4 bis 3,8 Gew.-% Kohlenstoff (C), 2,0 bis 2,4 Gew.-% Silizium (Si), 0,2 bis 0,5 Gew.-% Mangan (Mn), 0,2 bis 0,5 Gew.-% Kupfer (Cu), 0,005 bis 0,01 Gew.-% Zirkonium (Zr), 0,025 bis 0,06 Gew.-% Magnesium (Mg) und als Rest Eisen (Fe) und Verunreinigungen enthält, hergestellt wird.

7. Komponente einer hydraulischen Vorrichtung, hergestellt aus Gusseisen mit Kugelgraphit nach einem der Ansprüche 1 bis 5, wobei die Umwandlungsdicke einer Wärmeeinflusszone 65µm oder weniger beträgt und die Oberflächenhärte der hydraulischen Vorrichtungskomponente HRC 55 bis 65 beträgt, gemessen nach KS B 0806.

8. Verfahren zur Herstellung einer Komponente einer hydraulischen Vorrichtung nach Anspruch 7, wobei das Verfahren das Unterziehen des Gusseisens mit Kugelgraphit nach einem der Ansprüche 1 bis 5 einer Hochfrequenz-Induktionshärtung umfasst.

9. Verfahren zur Herstellung eines Komponente einer hydraulischen Vorrichtung nach Anspruch 8, wobei das Gusseisen mit Kugelgraphit einer Primärhärtung bei einer Temperatur von 850 bis 1050 °C unterzogen wird, mit Wasser oder öl abgekühlt wird, und dann einer Sekundärhärtung bei einer Temperatur von 120 bis 250 °C unterzogen wird.

## Revendications

1. Fonte de graphite sphéroïdal comprenant 3,4 à 3,8 % en poids de carbone (C), 2,0 à 2,4 % en poids de silicium (Si), 0,2 à 0,5 % en poids de manganèse (Mn), 0,2 à 0,5 % en poids de cuivre (Cu), 0,005 à 0,01 % de zirconium (Zr), 0,025 à 0,06 % en poids de magnésium (Mg) et le reste de fer (Fe) et des impuretés, et
dans laquelle le rapport de la teneur du cuivre (Cu) à la teneur du zirconium (Zr) est de 20 à 100.

2. Fonte de graphite sphéroïdal selon la revendication 1, dans la fonte de graphite sphéroïdal, le nombre de graphite sphérique par surface unitaire 1 mm² étant de 130 à 190 tel que mesuré selon la norme ISO 945-1:2008 et la taille du graphite sphérique mesurée selon la norme ISO 945-1:2008 étant de 50 µm ou moins.

3. Fonte de graphite sphéroïdal selon la revendication 1, dans la fonte de graphite sphéroïdal, le rapport de sphéroïdisation mesuré selon la norme KS D 4302:2011 étant de 80 % ou plus.

4. Fonte de graphite sphéroïdal selon la revendication 1, dans la fonte de graphite sphéroïdal, la fraction de pearlite dans une matrice mesurée selon la norme KS D 4302:2011 étant de 50 à 85 %.

5. Fonte de graphite sphéroïdal selon la revendication 1, dans la fonte de graphite sphéroïdal, la force de traction mesurée selon la norme KS B 0802:2003 étant de 550 à 650 MPa.

6. Procédé de fabrication d'une fonte de graphite sphéroïdal, ledit procédé comprenant les étapes consistant à :
(a) préparer un métal fondu de matière brute contenant du carbone (C), du silicium (Si), du manganèse (Mn), du fer (Fe), et des impuretés ;
(b) ajouter du cuivre au métal fondu de matière brute ;
(c) ajouter du zirconium au métal fondu de matière brute, auquel du cuivre (Cu) a été ajouté, de telle manière que le rapport (Cu/Zr) de la teneur du cuivre (Cu) à la teneur du zirconium (Zr) est de 20 à 100 ;
(d) ajouter un agent de sphéroïdisation constitué de Fe-Si-Mg au métal fondu de matière brute, auquel le zirconium (Zr) a été ajouté ; et
(e) ajouter un inoculant constitué de Fe-Si au métal fondu de matière brute, auquel l'agent de sphéroïdisation a été ajouté, préparant ainsi un métal fondu de fonte contenant 3,4 à 3,8 % en poids de carbone (C), 2,0 à 2,4 % en poids de silicium (Si), 0,2 à 0,5 % en poids de manganèse (Mn), 0,2 à 0,5 % en poids de cuivre (Cu), 0,005 à 0,01 % de zirconium (Zr), 0,025 à 0,06 % en poids de magnésium (Mg) et le reste de fer (Fe), et des impuretés.

7. Composant de dispositif hydraulique fabriqué à partir de la fonte sphéroïdale selon l'une quelconque des revendications 1 à 5, dans lequel l'épaisseur de transformation d'une zone affectée par la chaleur est de 65 µm ou moins et la dureté de surface du composant de dispositif hydraulique est HRC 55 à 65 telle que mesurée selon la norme KS B 0806.

8. Procédé de fabrication d'un composant de dispositif hydraulique selon la revendication 7, ledit procédé comprenant la soumission de la fonte de graphite sphéroïdal selon l'une quelconque des revendications 1 à 5 à un durcissement par induction à haute fréquence.

9. Procédé de fabrication d'un composant de dispositif hydraulique selon la revendication 8, dans lequel la fonte de graphite sphéroïdal est soumise à un durcissement primaire à une température de 850 à 1050 °C, refroidie avec de l'eau ou de l'huile, puis soumise à un durcissement secondaire à une température de 120 à 250 °C.
